# EUROPEAN PATENT APPLICATION

(11) **EP 1 625 925 A2**
(43) Date of publication of application: **15.02.2006**
(21) Application number: 05013521.9
(22) Date of filing: 23.06.2005
(51) Int. Cl.: B29C 45/14, B60R 13/04

(54) **Moulded article and method of manufacture**

(30) Priority: 25.06.2004 GB 0414287
(71) Applicant: Ecomold Limited, Dunstable Bedforshire LU5 4LN (GB)
(72) Inventor: Robins, Geoffrey Alick, Doncaster, South Yorkshire DN11 0EQ (GB)
(74) Representative: Raynor, Simon Mark

(57) **Abstract**

A method of manufacturing a moulded article includes placing a decorative trim element (26) in a mould (2) and injecting a thermoplastics material into the mould cavity (12) to form an injection moulded element having a decorative trim element attached thereto.

## Description

The present invention relates to a moulded article and a method of manufacture. In particular, but not exclusively, the invention relates to an injection moulded plastics article having a decorative trim element attached thereto, and a method of manufacturing the article.

The injection moulded article of the present invention may be designed for use in many different applications. For example, the article may be intended for use in a motor vehicle, and may comprise an interior panel, a radiator grill or similar. One specific example described in detail below relates to a scuff plate that is designed to fit into the bottom part of a car door opening, to protect the paintwork of the car from scratching by the feet of passengers entering and leaving the car. It should be understood however that the invention is not intended to be limited to that particular product or to a method of manufacturing that product.

There is sometimes a requirement for a moulded plastics article such as those described above to support a decorative trim element such as a polished metal plate, which may typically carry the maker's name or some other graphic or logo. Normally, the plastic part is manufactured by injection moulding and the trim element is then attached to the moulded plastic part, for example using an adhesive. However, this requires a number of additional manufacturing processes, including manufacturing the trim element and then attaching that element to the moulded part, which increase the production costs.

In the manufacture of some blow moulded products such as plastic bottles, it is common to attach a label to the product during moul ding, by placing a paper or synthetic paper label having aheat-activated adhesive coating in the mould, and then blow moulding the product. The adhesive is activated by contact with the hot plastics material, and the label is thus fixed to the blow moulded product in the mould. This in-mould labelling process provides a number of advantages over post-production labelling processes, in particular in terms of reduced manufacturing costs, as the need for a separate labelling process is avoided.

The present invention is based on the realisation that a similar in-mould process can be used in the production of an injection moulded product having a decorative trim element.

According to a first aspect of the invention there is provided a method of manufacturing a moulded article, the method including placing a decorative trim element in a mould and injecting a thermoplastics material into the mould to form an injection moulded element having the decorative trim element attached thereto.

The method of the present invention makes it possible to attach a trim element to the moulded product during the moulding process, so avoiding the need for a separate manufacturing process and thereby reducing the manufacturing costs. In addition, the trim element can consist of a simple inexpensive item, such as a laminated foil, rather than a polished metal plate. Component costs can also therefore be reduced.

One of the difficulties the inventors have faced in developing the process of the present invention is avoiding movement of the trim element in the mould as the thermoplastics material is injected into the mould. This is not generally a problem in a conventional in-mould labelling process used in the production of blow moulded products, because in that situation there is no significant movement between the plastics material and the mould: as the parison of hot plastics material is inflated it simply expands to fill the mould, rather than flowing rapidly through it. However, in an injection moulding process, hot thermoplastics material is injected at a high flow rate and pressure into the mould, which makes it very difficult to retain the trim element in the correct position.

According to a preferred aspect of the invention, the method includes applying a vacuum to retain the trim element in a desired position in the mould during moulding.

The term "vacuum" is used herein to mean a pressure that is significantly below the ambient pressure, so as to provide a useful retaining force. Typically, for example, the "vacuum" may consist of a pressure that is approximately 0.02 bar (2000 Pa) below ambient pressure.

Advantageously, the mould includes a recess for receiving the trim element and the vacuum is applied to the recess to retain the trim element in the recess during moulding. Preferably, the recess is shaped to fit the trim element so that there is only a small gap between the trim element and the peripheral edge of the recess. This ensures that there is a good air-tight seal between the trim element and the recess, to ensure that the trim element is held securely in position by the vacuum. Advantageously, the dimensions of the recess in the plane of the trim element are larger than the corresponding dimensions of the trim element by approximately 0-1mm, preferably 0.1-0.5mm.

Preferably, the recess is defined by a peripheral wall in the mould. This makes it possible to manufacture a product in which the surface of the trim element is substantially level with, or slightly below, the surrounding surface of the moulded product, which helps to protect the trim element from abrasion and scratching.

Advantageously, the trim element has a laminated structure, including a decorative layer and a thermoplastic substrate, which fuses with the hot plastics material injected into the mould.

Advantageously, the decorative layer comprises a vinyl polymer, which preferably has a thickness of approximately 50 microns.

According to a further aspect of the invention there is provided a moulded article including an injection moulded element having a decorative trim element attached thereto, wherein the injection moulded element is moulded to the trim element.

Advantageously, the injection moulded element includes a trim attachment portion and a peripheral recessed portion that extends around the trim attachment portion, and the trim element is attached to the trim attachment portion and extends at least partially into the peripheral recessed portion.

The peripheral recessed portion preferably includes a peripheral groove.

The trim element may include a raised border portion, to protect the face of the trim element from wear.

Advantageously, the trim element has a laminated structure including a decorative layer and a thermoplastic substrate, which is fused to the injection moulded element.

The decorative layer may consist of a vinyl polymer, and may include a decorative surface texture, graphic or logo.

An embodiment of the invention will now be described, by way of example, with reference to the accompanying drawings, in which:
Figure 1 is a cross-section through a mould used in a method of manufacturing according to the present invention;
Figure 2 is a cross-section showing part of the mould shown in Figure 1, at an enlarged scale, in a first step of the manufacturing process;
Figure 3 is a cross-section showing part of the mould at an enlarged scale, in a second step of the manufacturing process; and
Figure 4 is a plan view of an article according to the invention.

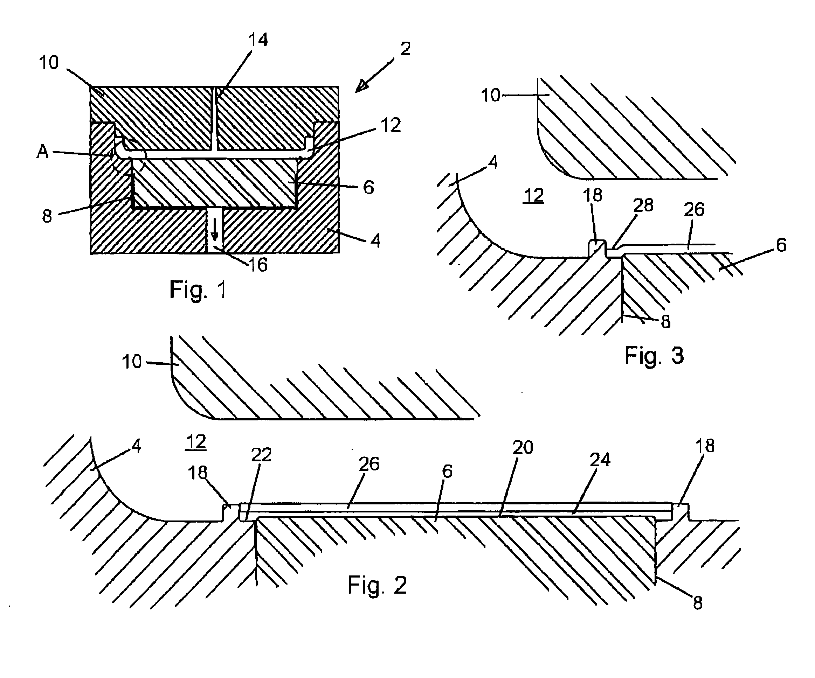

Figure 1 is a cross-sectional view of an injection moulding tool 2, for use in a method of manufacturing according to the invention. The mould tool 2 is also shown at an enlarged scale in Figures 2 and 3, Figure 2 showing only the circled region A of Figure 1 towards the left-hand side of the mould tool, whereas Figure 2 shows parts of the mould on the left and right-hand sides of Figure 1, the middle part having been omitted from the drawing.

It should be understood that the mould tool shown in Figures 1-3 illustrates only one example of a tool suitable for use in the invention, and has been simplified to show only the most important features of the invention. Various modifications to the mould tool are of course possible.

The mould tool shown in Figures 1-3 includes a lower mould block 4, an insert block 6 that is secured within a recess 8 in the lower mould block 4, and an upper mould block 10. A moulding cavity 12 is defined between on one hand the lower mould block 4 and the insert block 6, and on the other hand the upper mould block 10. The mould cavity 12 extends along the axis of view (perpendicular to the plane of the cross-section) so that, in this case, the mould tool is designed to produce a moulded plate with a shallow U-shaped cross-section. The upper mould block 10 can be separated from the lower mould block 4 to release the moulded product from the moulding cavity 12.

An injection port 14 extends through the upper mould block 10, allowing molten thermoplastic material to be injected at high pressure into the moulding cavity 12. An air duct 16 is provided in the lower mould block 4 and extends into the recess 8. This air duct 16 is connected to a vacuum pump (not shown) and allows air to be sucked from the moulding cavity 12 around the edges of the insert block 6. A number of air flow channels (not shown) may be provided if required in the insert block 6 and/or the lower mould block 4, to allow air to flow around the sides of the insert block 6.

A small peripheral wall 18, for example having a height and width of approximately 1 mm, is provided on the upper surface of the lower mould block 4 so that it projects into the moulding cavity 12. The peripheral wall 18 extends around the edge of the recess 8 and the insert block 6 and it defines with the upper surface 20 of the insert block 6 and the included part 22 of the upper surface of the lower mould block 4 a shallow mould recess 24.

Figures 2 and 3 also show a decorative trim element 26, which is placed in the mould prior to moulding, so that it fuses during moulding to the moulded article. According to one embodiment, the decorative trim element 26 is a laminated foil including a substrate layer of a thermoplastic polyolefin, a decorative intermediate layer comprising a 50 micron coating of a vinyl polymer, for example polyvinylidene fluoride or polymethyl methacrylate (PVDF/PMMA), which may for example be matched to the colour of the vehicle body paint or of a contrasting colour or finish (e.g. a bright metal finish), and a tough protective top layer comprising a 50 micron coating of clear PVDF/PMMA. The material of the substrate is chosen to be compatible with the material of the injection moulded part, so that it fuses to the injected plastics material. The substrate may for example be a modified polypropylene.

Alternatively, the decorative trim element 26 may consist of a metal foil, optionally with a coating of a heat-activated adhesive.

A process for manufacturing a moulded product with a decorative trim element 26 will now be described. First, with the mould tool 2 open (i.e. with the upper mould block 10 removed), a decorative trim element 26, is placed in the mould so that it rests on the upper part of the peripheral wall 18, as shown in Figure 2. The trim element 26 may, for example, be placed in position by a mechanical arm. It will be noted that the trim element 26 is fractionally smaller than the shallow recess 24 defined by the peripheral wall 18, so that it is a close fit within the recess. Apart from this, the shape of the trim element 26 is matched to the shape of the shallow recess 24.

A vacuum is then applied to the air duct 16, so that air is sucked from the shallow recess 24 beneath the foil 26. As a result, the foil 26 is drawn downwards into the shallow recess 24. The edges of the trim element 26 thus engage the included part 22 of the lower mould block 4. This provides a good air-tight seal between the trim element 26 and the lower mould block 4, and ensures that the trim element 26 is drawn to the bottom of the shallow recess 24, as shown in Figure 3.

As shown in Figures 2 and 3, the upper surface 20 of the insert block 6 lies fractionally above the upper surface 22 of the surrounding portion of the lower mould block 4, with the result that the edge regions 28 of the decorative trim element 26 are drawn slightly further into the shallow recess 24 than the remainder of the trim element 26. As a result, in the finished moulded product, the face of the decorative trim element is recessed slightly below the edge regions 28 of the foil.

The mould tool 2 is then closed (the upper mould block 10 is located in position on the lower mould block 4, as shown in Figure 1), and molten thermoplastic material is injected into the moulding cavity 12 through the injection moulding duct 14. The thermoplastic material fills the moulding cavity 12 and the mould is then cooled, causing the plastics material to set. At the same time, the thermoplastics material fuses with the thermoplastic substrate layer (in Figure 3, the upper surface) of the decorative trim element 26. Alternatively, a beat activated adhesive can be provided on the rear surface of the decorative trim element 26. The mould tool 2 is then opened and the moulded product with the decorative trim element attached thereto is ejected from the mould. This may be achieved, for example, by injecting air into the shallow recess 24 through the air duct 16.

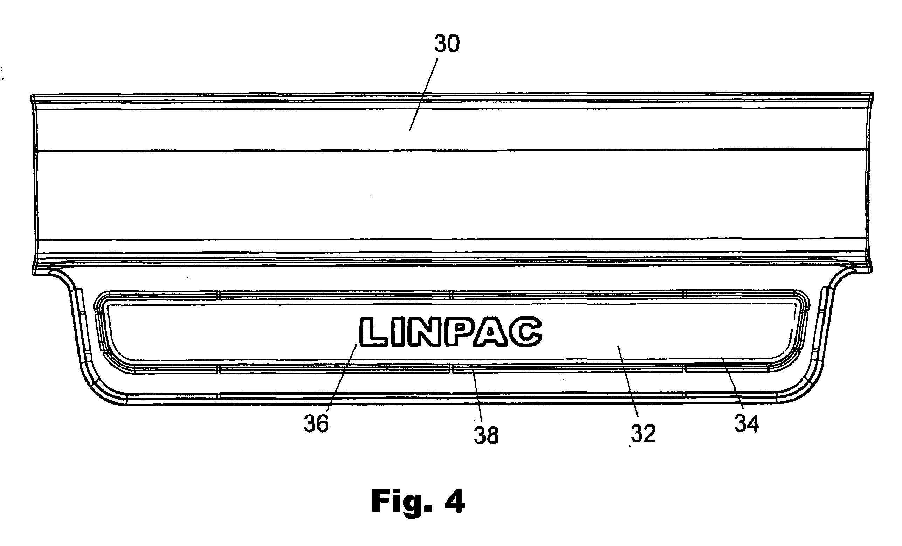

An example of a moulded product according to the invention is shown in Figure 4. In this example, the product is a scuff plate, intended to be fitted in the lower portion of a door opening of a car. The product includes an injection moulded body 30 having a decorative trim element 32 attached thereto. The face of the trim element 32 is recessed slightly below the peripheral region 34 of the trim element, so that it is protected from abrasion and scratching. A name, logo, texture or other kind of design may be applied to the foil: in this case, the registered trade mark LINPAC 36 is shown by way of example. A shallow groove 38 extends around the periphery of the decorative trim element 32, this groove 38 having been formed by the peripheral wall 18 in the mould. The groove 38 serves to create a visual boundary between the decorative trim element 32 and the moulded product 30, and creates the impression that the trim element consists of a solid metal plate.

## Claims

1. A method of manufacturing a moulded article, the method including placing a decorative trim element in a mould and injecting a thermoplastics material into the mould to form an injection moulded element having the decorative trim element attached thereto.

2. A method according to claim 1, wherein the method includes applying a vacuum to retain the trim element in a desired position in the mould during moulding.

3. A method according to claim 2, wherein the mould includes a recess for receiving the trim element and the vacuum is applied to the recess to retain the trim element in the recess during moulding.

4. A method according to claim 3, wherein the recess is slightly larger than the trim element so that the trim element fits into the recess.

5. A method according to claim 4, wherein the dimensions of the recess in the plane of the trim element are larger than the corresponding dimensions of the trim element by approximately 0-1mm, preferably 0.1-0.5mm.

6. A method according to claim 4 or claim 5, wherein the recess is defined by a peripheral wall in the mould.

7. A method according to any one of the preceding claims, wherein the trim element has a laminated structure, including a decorative layer and a thermoplasti substrate.

8. A moulded article including an injection moulded element having a decorative trim element attached thereto, wherein the injection moulded element is moulded to the trim element.

9. A moulded article according to claim 8, wherein the injection moulded element includes a trim attachment portion and a peripheral recessed portion that extends around the trim attachment portion, and the trim element is attached to the trim attachment portion and extends at least partially into the peripheral recessed portion.

10. A moulded article according to claim 9, wherein the peripheral recessed portion includes a peripheral groove.

11. A moulded article according to claim 9 or claim 10, wherein the trim element includes a raised border portion.

12. A moulded article according to any one of claims 8 to 11, wherein the trim element has a laminated structure, including a decorative layer and a thermoplastic substrate layer.

13. A moulded article according to any one of claims 8 to 12, wherein the substrate layer of the trim element is fused to the injection moulded element.

14. A moulded article according to any one of claims 8 to 13, wherein the decorative surface element includes a vinyl polymer.

15. A moulded article according to any one of claims 8 to 14, wherein the trim element includes a decorative surface texture, graphic or logo.

16. A moulded article according to any one of claims 8 to 15, in which the trim element includes a clear protective layer over the decorative layer.
